# EUROPEAN PATENT APPLICATION

(11) **EP 2 566 244 A1**
(43) Date of publication of application: **06.03.2013**
(21) Application number: 11774887.1
(22) Date of filing: 20.04.2011
(51) Int. Cl.: H04W 36/14, H04W 48/18, H04W 88/06

(54) **MOBILE STATION AND WIRELESS CONTROL APPARATUS**

(30) Priority: 30.04.2010 JP 2010105992
(71) Applicant: NTT DoCoMo, Inc., Tokyo 100-6150 (JP)
(72) Inventor: NAKAMURA, Yuichiro, Tokyo 100-6150 (JP); AOYAGI, Kenichiro, Tokyo 100-6150 (JP); MATSUTANI, Hideyuki, Tokyo 100-6150 (JP); SUGANO, Kiminobu, Tokyo 100-6150 (JP)
(74) Representative: HOFFMANN EITLE
(86) International application number: PCT/JP2011/059729
(87) International publication number: WO 2011/136104

(57) **Abstract**

One aspect of the present invention relates to a mobile station having abilities of communicating with a first network and a second network wherein the first network and the second network use mutually different radio access technologies including a receiving unit configured to receive broadcast information of the second network from the first network, a storage unit configured to store the received broadcast information of the second network and a pre-redirection information setting unit configured to, when the broadcast information of the second network is stored in the storage unit, set pre-redirection information included in a radio connection request message to a predefined value.

## Description

### TECHNICAL FIELD

The present invention relates to a mobile communication system and more particularly relates to a mobile communication system for providing radio communications via multiple networks using different radio access technologies.

### BACKGROUND ART

Recently, a variety of radio access technologies have been developed, and radio communication services based on the newly developed radio access technologies have been introduced. When a radio communication service based on a new radio access technology is introduced, the radio communication service based on the new radio access technology would coexist with radio communication services based on existing radio access technologies. For example, a UTRA (UMTS Terrestrial Radio Access) and an EUTRA (Evolved UTRA), which is an evolved radio access technology of the UTRA, are provided as the radio access technologies, and a mobile communication system including a UTRA network and an EUTRA network is envisaged.

In the case where such two networks conforming to different radio access technologies are utilized in a mobile communication system, a mobile station or a user equipment (UE) is typically configured to have abilities of communicating with both of the networks and can selectively utilize these networks. To this end, various redirection procedures are defined for enabling the mobile station to transition between networks pursuant to different radio access technologies.

For example, in the mobile communication system including the UTRA network and the EUTRA network, these networks are connected to each other and exchange various types of information such as broadcast information between each other. Alternatively, mutual information can be exchanged under operation management. In this manner, one of the networks can provide a connecting mobile station with information regarding the other network. For example, the mobile station communicating with the EUTRA network can obtain broadcast information regarding the UTRA network and utilize the obtained broadcast information regarding the UTRA network for redirection to the UTRA network.

According to current 3GPP (3rd Generation Partnership Project) standard specifications, however, when a mobile station residing in the EUTRA network receives the broadcast information regarding the UTRA network and is redirected from the EUTRA network to the UTRA network, the mobile station does not possess necessary information, and accordingly the UTRA network cannot assign Cell_FACH for a connection mode of the mobile station at timing of radio connection (RRC CONNECTION) configuration.

Also, the UTRA broadcast information supplied from the EUTRA network to the mobile station often includes incomplete neighboring cell information. This is because the EUTRA network may not provide the mobile station with the whole UTRA broadcast information obtained from the UTRA network to save radio resources but may provide a portion of the obtained UTRA broadcast information. Thus, there is a risk that if the mobile station uses the incomplete UTRA broadcast information, the mobile station may not be able to maintain established radio connection.

Furthermore, according to the currently defined redirection procedures, if the mobile station connected to the EUTRA network is indicated to redirect to the UTRA network due to some reasons and transmits a radio connection request message to the UTRA network, the UTRA network could not identify based on which trigger event the mobile station has requested the radio connection. That is, the mobile station may have requested the radio connection in response to a redirection indication from the EUTRA network or may have originally requested the radio connection to the UTRA network regardless of such a redirection indication. For this reason, if the UTRA network rejects the connection by the mobile station due to some grounds, the UTRA network might indicate the mobile station to redirect to the EUTRA network in a radio connection rejection message transmitted to the mobile station.

On the other hand, these problems can be overcome by providing a new information element (IE) in a conventional radio connection request message (RRC CONNECTION REQUEST) and using this information element to transmit necessary information to a destination network when the mobile station requests the radio connection. However, it is preferable that the above problems can be overcome without providing the new information element in compliance with the current standard specification.

### SUMMARY OF INVENTION

### [PROBLEM TO BE SOLVED BY THE INVENTION]

Accordingly, the present invention is directed to overcome the above-stated problems. One object of the present invention is to enable a mobile station to effectively connect to several networks in a mobile communication system including the multiple networks using different radio access technologies.

### [MEANS FOR SOLVING THE PROBLEM]

One aspect of the present invention relates to a mobile station having abilities of communicating with a first network and a second network wherein the first network and the second network use mutually different radio access technologies including a receiving unit configured to receive broadcast information of the second network from the first network, a storage unit configured to store the received broadcast information of the second network and a pre-redirection information setting unit configured to, when the broadcast information of the second network is stored in the storage unit, set pre-redirection information included in a radio connection request message to a predefined value.

Another aspect of the present invention relates to a radio controller for controlling radio connection between a mobile station, the mobile station having abilities of communicating with a first network and a second network, and the second network wherein the first network and the second network use mutually different radio access technologies including a receiving unit configured to receive a radio connection request message for wirelessly connecting to the second network from the mobile station, a pre-redirection information determination unit configured to determine whether pre-redirection information in the received radio connection request message is set to a predefined value and a radio control determination unit configured to, if establishment of radio connection between the mobile station and the second network is impossible, transmit a radio connection rejection message including a redirection indication to the first network based on whether the pre-redirection information is set to the predefined value.

### [ADVANTAGE OF THE INVENTION]

According to the present invention, a mobile station can effectively connect to several networks in a mobile communication system including the multiple networks using different radio access technologies.

### BRIEF DESCRIPTION OF DRAWINGS

FIG. 1 illustrates a mobile communication system according to one embodiment of the present invention;
FIG. 2 illustrates an arrangement of a mobile station according to one embodiment of the present invention;
FIG. 3 illustrates an arrangement of a radio controller according to one embodiment of the present invention; and
FIG. 4 is a sequence diagram illustrating cooperation among components in a mobile communication system according to one embodiment of the present invention.

### EMBODIMENTS FOR CARRYING OUT THE INVENTION

Embodiments of the present invention are described below with reference to the drawings.

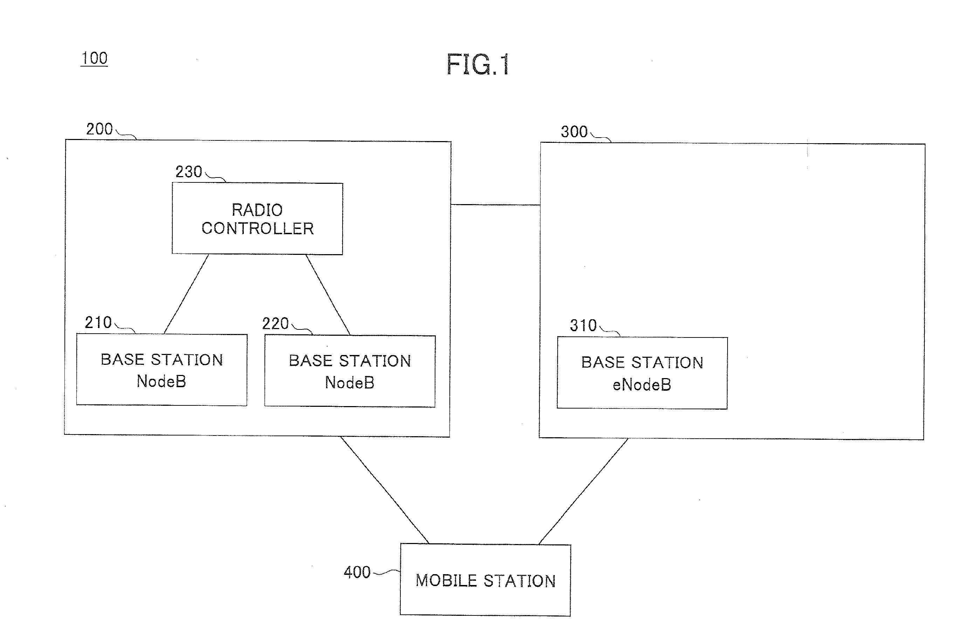

A mobile communication system according to one embodiment of the present invention is described with reference to FIG. 1. FIG. 1 illustrates a mobile communication system according to one embodiment of the present invention. As illustrated, a mobile communication system 100 includes a UTRA (UMTS Terrestrial Radio Access) system 200, an EUTRA (Evolved UTRA) system 300 and a mobile station or a user equipment (UE) 400. In the mobile communication system 100, the mobile station 400 can wirelessly communicate with both the UTRA system 200 and the EUTRA system 300. Also, the UTRA system 200 and the EUTRA system 300 are communicatively connected to each other. Although only the single mobile station 400 is illustrated in the illustrated embodiment, the mobile communication system 100 typically includes multiple mobile stations 400. Also, the present embodiment is described in conjunction with the mobile communication system 100 using the two specific radio access technologies, that is, the UTRA system 200 and the EUTRA system 300, but the present invention is not limited to this and can be applied to systems using any other appropriate radio access technologies.

The UTRA system 200 includes one or more base stations (NodeBs) 210, 220 wirelessly connected to the mobile station 400 and a radio controller (RNC) 230 connected to the base stations 210, 220. The UTRA system 200 constitutes a network pursuant to the radio access technology UTRA. Each of the base stations (NodeBs) 210, 220 consists of an antenna, a controller and so on and transmits and receives radio signals to/from the mobile station 400. Each of the base stations provides a certain communication area referred to as a cell and transmits and receives radio signals to/from the mobile station 400 within the cell. Although only the two base stations 210, 220 are illustrated in FIG. 1, multiple base stations are appropriately disposed to cover the whole communication area of the mobile communication system 100. The radio controller 230 is connected to the base stations 210, 220 and controls the base stations 210, 220. Typically, the UTRA system 200 provides voice communication services in accordance with a circuit switching (CS) scheme and data communication services in accordance with a packet switching (PS) scheme.

The EUTRA system 300 includes one or more base stations (eNodeBs) 310 wirelessly connected to the mobile station 400. The EUTRA system 300 constitutes a network pursuant to the radio access technology EUTRA. The base station (eNodeB) 310 typically serves as both the base station and the controller for the above-stated UTRA system 200 and communicates with the mobile station 400. Typically, the EUTRA system 300 provides the voice communication services and the data communication services in accordance with the PS scheme. In response to occurrence of a predefined event, the EUTRA system 300 indicates the mobile station 400 wirelessly connected to the base station 310 to redirect to the UTRA system 200. The redirection operation may include a CS fallback, for example. The CS fallback is an operation where if the mobile station 400 cannot perform voice communication via the EUTRA system 300 for some reason, the mobile station 400 is caused to redirect to the UTRA system 200 to achieve the voice communication via the UTRA system 200. However, the present invention is not limited to this and can be applied to redirection operations for redirecting the mobile station 400 from the EUTRA system 300 to the UTRA system 200 for any type of communication including the data communication. Also, in the present embodiment, redirection operations between systems are described in conjunction with redirection operations between the UTRA system 200 and the EUTRA system 300 having the two specific radio access technologies (RATs). However, the present invention is not limited to this and may be applied to redirection operations between systems having any other appropriate radio access technologies.

Also, the UTRA system 200 and the EUTRA system 300 are communicatively connected to each other and mutually exchange information such as respective broadcast information. For example, upon obtaining broadcast information of the UTRA system 200 in this manner, the EUTRA system 300 can provide the mobile station 400 connected to the EUTRA system 300 with the obtained broadcast information of the UTRA system 200. Although the EUTRA system 300 can provide the mobile station 400 with all the obtained broadcast information, transmission and storage of all the broadcast information to the mobile station 400 would consume a large amount of resources. For this reason, the EUTRA system 300 may extract a portion of the obtained broadcast information, package the extracted portion and provide the mobile station 400 with the packaged portion. Also, the UTRA system 200 also obtains broadcast information of the EUTRA system 300 and provides the mobile station 400 with the obtained EUTRA broadcast information.

The mobile station 400 is configured to have abilities of communicating with both the UTRA system 200 and the EUTRA system 300. In other words, the mobile station 400 has functions and arrangements to wirelessly communicate with the UTRA system 200 and the EUTRA system 300.

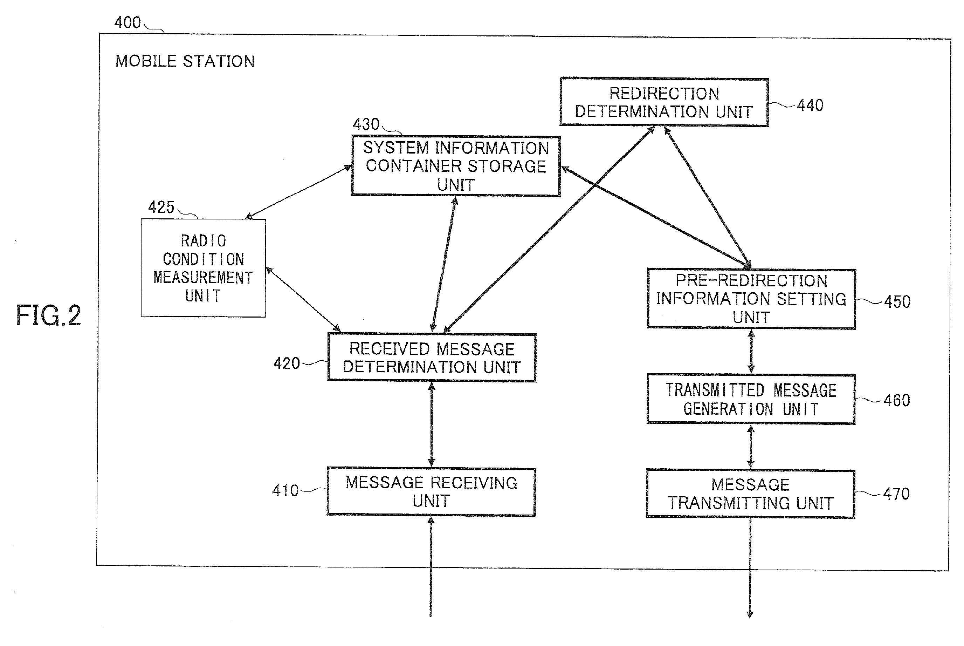

Next, a mobile station according to one embodiment of the present invention is described in detail with reference to FIG. 2. FIG. 2 illustrates an arrangement of the mobile station according to one embodiment of the present invention. In this embodiment, as stated above, the mobile station can communicate with both the UTRA system 200 and the EUTRA system 300. Note that some well-known components such as an antenna, a modulator/a demodulator and an encoder/ a decoder in the mobile station 400 are omitted as needed so as to avoid ambiguity of the present invention.

As illustrated, the mobile station 400 includes a message receiving unit 410, a received message determination unit 420, a radio condition measurement unit 425, a system information container storage unit 430, a redirection determination unit 440, a pre-redirection information setting unit 450, a transmitted message generation unit 460 and a message transmitting unit 470.

The message receiving unit 410 receives various messages and signals transmitted from the UTRA system 200, the EUTRA system 300 and so on. Then, the message receiving unit 410 performs appropriate operations on the received messages and signals, such as demodulation and decoding, and provides the received message determination unit 420 with the resulting messages.

The received message determination unit 420 determines contents of the messages supplied from the message receiving unit 410.

In one embodiment, the received message determination unit 420 determines whether the message received from the presently communicating system includes information regarding a system other than the presently communicating system. Typically, the EUTRA system 300 sends the mobile station 400 not only its own broadcast information but also broadcast information regarding the UTRA system 200 obtained from the mutually connected UTRA system 200. Accordingly, the received message determination unit 420 determines whether such UTRA broadcast information is included in the message received from the EUTRA system 300. If the UTRA broadcast information is included in the message received from the EUTRA system 300, the received message determination unit 420 stores the UTRA broadcast information in the system information container storage unit 430.

Also in other embodiments, the received message determination unit 420 determines whether the received message includes a redirection indication transmitted from the EUTRA system 300. If the received message includes the redirection indication, the received message determination unit 420 informs the redirection determination unit 440 that the mobile station 400 has been indicated to redirect from the EUTRA system 300.

Also, when various messages regarding radio connection (for example, RRC CONNECTION RELEASE and RRC CONNECTION SETUP) are transmitted from the network side, the received message determination unit 420 supplies the received messages to the transmitted message generation unit 460 to transmit corresponding appropriate response messages.

In addition, when a control message such as a Measurement Control message is transmitted from the network side, the received message determination unit 420 causes components of the mobile station 400 to perform an appropriate operation corresponding to the control message. For example, if the Measurement Control message is transmitted, the received message determination unit 420 instructs the radio condition measurement unit 425 of the mobile station 400 to measure a radio condition in a neighboring cell and report measurement results.

Upon being instructed to measure the radio condition in the neighboring cell from the received message determination unit 420, the radio condition measurement unit 425 measures the radio condition in the neighboring cell of the mobile station 400 in the connecting network and reports the measurement results to the network. The measurement results are supplied to the system information container storage unit 430. The radio condition in the neighboring cell may be represented by a reception level, a reception SINR (Signal to Interference and Noise Ratio) and so on of reference signals transmitted from the neighboring cell.

The system information container storage unit 430 stores various system information such as the UTRA broadcast information supplied from the received message determination unit 420. Also, if the system information container storage unit 430 receives and stores the UTRA broadcast information, the system information container storage unit 430 informs the pre-redirection information setting unit 450 that the UTRA broadcast information has been stored. Also, in response to an access request from other components such as the pre-redirection information setting unit 450, the system information container storage unit 430 supplies the stored system information. In addition, if the mobile station 400 measures the radio condition in the neighboring cell, the system information container storage unit 430 updates the stored system information in accordance with the measurement results.

When the redirection determination unit 440 is informed by the received message determination unit 420 that the redirection indication has been received, the redirection determination unit 440 determines the contents of the redirection indication, activates appropriate redirection operations and informs the pre-redirection information setting unit 450 that the redirection indication has been received. For example, if the received redirection indication is a CS fallback from the EUTRA system 300 to the UTRA system 200, the redirection determination unit 440 disconnects the radio connection to the EUTRA system 300 and requests radio connection to the UTRA system 200 in accordance with a predefined procedure.

Upon being informed by the system information container storage unit 430 that the UTRA broadcast information has been stored, the pre-redirection information setting unit 450 sets a value of pre-redirection information (pre-redirection info), which is an information element included in a radio connection request, to False.

Also, upon being informed by the redirection determination unit 440 that the redirection indication has been received, the pre-redirection information setting unit 450 sets a value of the pre-redirection information (pre-redirection info), which is an information element included in a radio connection request transmitted to a redirection destination system, to False.

This pre-redirection information is an existing information element conventionally used in the UTRA standard. As stated above, the UTRA system 200 sends the mobile station 400 information regarding the EUTRA system 300 obtained from the mutually connected EUTRA system 300. The mobile station 400 determines whether the mobile station 400 has communication capabilities required by the EUTRA system 300 based on the received information regarding the EUTRA system 300 and if the mobile station 400 has the required communication capabilities, sets the value of pre-redirection information to True. On the other hand, if the mobile station 400 does not have the required communication capabilities, the mobile station 400 is specified not to transmit the pre-redirection information. In other words, for the case where the pre-redirection information is set to False, the associated meaning is not currently specified. In the present invention, some meaning is associated with the case where the pre-redirection information is set to False. Specifically, if the mobile station 400 has the UTRA broadcast information and/or if the mobile station 400 has received the redirection indication from the EUTRA system 300, the pre-redirection information is set to False.

The transmitted message generation unit 460 generates various messages for transmission from the mobile station 400. Upon a predefined event such as the mobile station 400 being powered on or a communication start indication being received from a user, the mobile station 400 activates radio communication with the UTRA system 200 or the EUTRA system 300. Specifically, the transmitted message generation unit 460 generates various messages and causes the message transmitting unit 470 to transmit the generated messages in accordance with the radio communication connection procedure corresponding to a destination network.

In one embodiment, when the mobile station 400 tries to communicate with the UTRA system 200 wirelessly, the transmitted message generation unit 460 first generates a radio connection request message (RRC CONNECTION REQUEST) and causes the message transmitting unit 470 to transmit the generated message to the UTRA system 200. In order to generate the radio connection request message, the transmitted message generation unit 460 accesses the pre-redirection setting unit 450 and determines the value of the pre-redirection information (pre-redirection info) as an information element of the radio connection request message. If the pre-redirection information is set to False, the transmitted message generation unit 460 generates the radio connection request message having the pre-redirection information set to False.

The message transmitting unit 470 transmits messages supplied from the transmitted message generation unit 460 to a destination system. The message transmitting unit 470 performs appropriate operations such as encoding and modulation to transmit the supplied messages to the destination system.

Although the case where the mobile station 400 is redirected from the EUTRA system 300 and is wirelessly connected to the UTRA system 200 has been described in the above-stated embodiment, the embodiment is simply illustrative. The present invention can be applied to redirection operations between systems using different RATs.

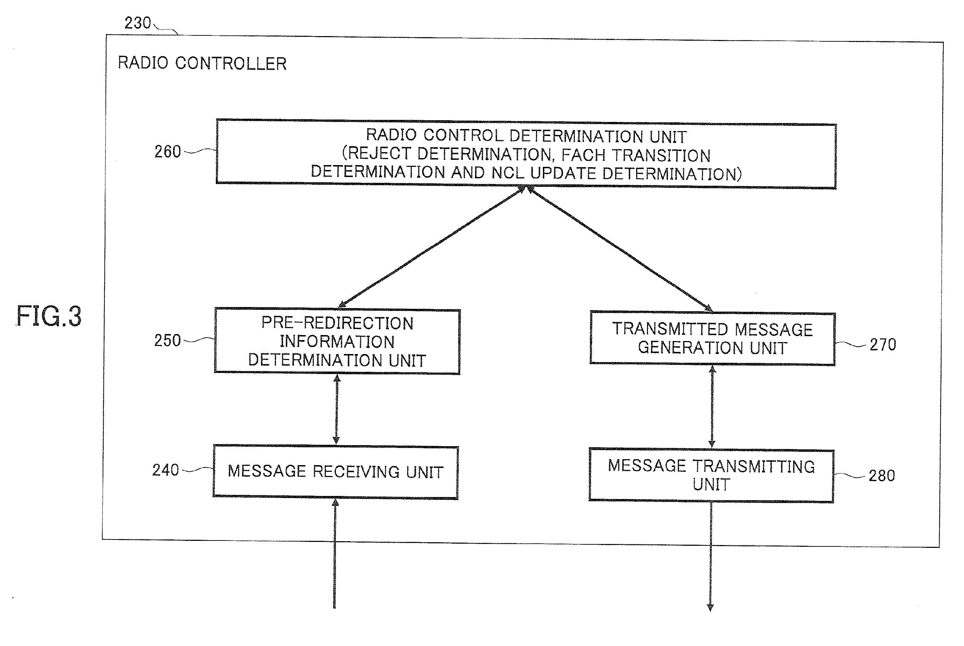

Next, a radio controller in the UTRA system according to one embodiment of the present invention is described in detail with reference to FIG. 3. FIG. 3 illustrates an arrangement of a radio controller according to one embodiment of the present invention.

As illustrated, a radio controller (RNC) 230 in the UTRA system 200 includes a message receiving unit 240, a pre-redirection information determination unit 250, a radio control determination unit 260, a transmitted message generation unit 270 and a message transmitting unit 280.

The message receiving unit 240 receives various messages and signals from the mobile station 400, performs appropriate operations such as demodulation and decoding, and supplies the received messages to the pre-redirection information determination unit 250.

The pre-redirection information determination unit 250 determines whether the message supplied from the message receiving unit 240 is a radio connection request message (RRC CONNECTION REQUEST) incoming from the mobile station 400 and if the message is the radio connection request message, determines a value of the information element pre-redirection information (pre-redirection info) in the message. If the pre-redirection information is set to False, that is, if the mobile station 400 has the UTRA broadcast information and/or if the mobile station 400 has received the redirection indication from the EUTRA system 300, the pre-redirection information determination unit 250 informs the radio control determination unit 260 as well as supplying the received radio connection request message to the radio control determination unit 260. In the other cases, the pre-redirection information determination unit 250 simply forwards the message supplied from the message receiving unit 240 to the radio control determination unit 260.

The radio control determination unit 260 performs radio control corresponding to the message supplied from the pre-redirection information determination unit 250 and causes the transmitted message generation unit 270 to generate a response message corresponding to the supplied message.

Typically, if the radio controller 230 receives a radio connection request message (RRC CONNECTION REQUEST) from the mobile station 400, the radio controller 230 tries to establish radio communication with the mobile station 400. However, if the radio controller 230 has failed to establish the radio communication with the mobile station 400 for some reason, the radio controller 230 may transmit a radio connection rejection message (RRC CONNECTION REJECT) to the mobile station 400 and instruct the mobile station 400 to redirect to another system such as the EUTRA system 300. In this case, if the mobile station 400 has been already indicated by the EUTRA system 300 to redirect to the UTRA system 200 and has requested the radio connection to the UTRA system 200 per this redirection indication, it is undesirable for the mobile station 400 to request the radio connection to the EUTRA system 300 again.

In this embodiment, the radio control determination unit 260 determines whether to transmit the radio connection rejection message (RRC CONNECTION REJECT) to the mobile station 400 depending on the value of the pre-redirection information (pre-redirection info) in the radio connection request message transmitted from the pre-redirection information determination unit 250 (Reject determination). Specifically, if the pre-redirection information is set to False, that is, if the mobile station 400 has the UTRA broadcast information and/or if the mobile station 400 has received the redirection indication from the EUTRA system 300, the radio control determination unit 260 transmits the radio connection rejection message to the mobile station 400 without instructing the mobile station 400 to redirect to the EUTRA system 300. In this case, the radio controller 230 may try to establish radio connection to the mobile station 400 again or simply reject the radio connection by transmitting the radio connection rejection message to the mobile station 400.

Alternatively, the radio controller 230 may not transmit a radio connection permission message to the mobile station 400.

According to setting of the value of the pre-redirection information as stated above, if the mobile station 400 has the UTRA broadcast information and/or if the mobile station 400 has received the redirection indication from the EUTRA system 300, the pre-redirection information is set to False. In other words, even in the case where the mobile station 400 does not have the UTRA broadcast information, if the mobile station 400 has received the redirection indication from the EUTRA system 300, the pre-redirection information is set to False. In this case, even if the mobile station 400 does not have the UTRA broadcast information, the radio controller 230 operates under assumption that the mobile station 400 has the UTRA broadcast information, and another redirection operation can be prevented appropriately.

On the other hand, if the radio controller 230 can establish the radio connection to the mobile station 400, the radio control determination unit 260 sets a connection mode for the mobile station 400 to Cell_DCH being a connection mode where a dedicated channel is assigned instead of Cell_FACH being a connection mode where only a common channel is assigned, taken into account that the pre-redirection information is set to False, to transmit a response message (RRC CONNECTION SETUP) to the radio connection request message to the mobile station 400 (FACH transition determination). Accordingly, the mobile station 400 could communicate with the UTRA system 200 in the Cell_DCH mode being the connection mode where the dedicated channel is initially assigned.

As can be understood from the above description, if the pre-redirection information in the radio connection request message from the mobile station 400 is set to False, the mobile station 400 may have the UTRA broadcast information. However, this UTRA broadcast information may not necessarily include neighboring cell information as desired by the UTRA system 200. In other words, as stated above, the EUTRA system 300 may not necessarily transmit all the UTRA broadcast information obtained from the UTRA system 200 to the mobile station 400 and may often transmit only a system information container where only a portion of the UTRA broadcast information is packaged. For this reason, even if the mobile station 400 has established radio connection to the UTRA system 200, the mobile station 400 cannot help using such incomplete UTRA broadcast information and may not be able to maintain the radio connection in a better state. Accordingly, the radio controller 230 may cause the mobile station 400 to update the UTRA broadcast information for a neighboring cell (NCL) and so on.

To this end, the radio control determination unit 260 determines whether to transmit a measurement request message (Measurement Control) to the mobile station 400 based on the value of the pre-redirection information (pre-redirection info) in the radio connection request message transmitted from the pre-redirection information determination unit 250 in order to cause the mobile station 400 to measure a radio condition in the neighboring cell of the mobile station 400 after establishment of the radio connection and update the UTRA broadcast information stored in the mobile station 400 (NCL update determination). In other words, if the pre-redirection information in the radio connection request message from the mobile station 400 is set to False, the radio control determination unit 260 causes the transmitted message generation unit 270 to generate a measurement request message and transmit it to the mobile station 400.

Note that the radio control determination unit 260 performs all of the Rejection determination, the FACH transition determination and the NCL update determination in the above-stated embodiment for explanatory convenience, the present invention is not limited to this. In other words, the radio control determination unit 260 may perform at least one of the Reject determination, the FACH transition determination and the NCL update determination. For example, if the radio control determination unit 260 performs only the Rejection determination, the radio control determination unit 260 does not have to perform the FACH transition determination and the NCL update determination. In this case, when establishment of the radio connection is possible, the radio control determination unit 260 establishes the radio connection to the mobile station without referring to the value of the pre-redirection information in accordance with a predefined radio connection establishment procedure.

The transmitted message generation unit 270 generates various messages for transmission from the radio controller 230. Specifically, the transmitted message generation unit 270 generates various messages based on instructions from the radio control determination unit 260 and causes the message transmitting unit 280 to transmit the generated messages in accordance with a predefined radio communication connection procedure.

The message transmitting unit 280 transmits messages supplied from the transmitted message generation unit 270 to the mobile station 400. The message transmitting unit 280 performs appropriate operations such as encoding and modulation to transmit the supplied message to the mobile station 400.

Although the case where the mobile station 400 is redirected from the EUTRA system 300 and is wirelessly connected to the UTRA system 200 has been described in the above-stated embodiment, the embodiment is simply illustrative. The present invention can be applied to redirection operations between systems using different RATs.

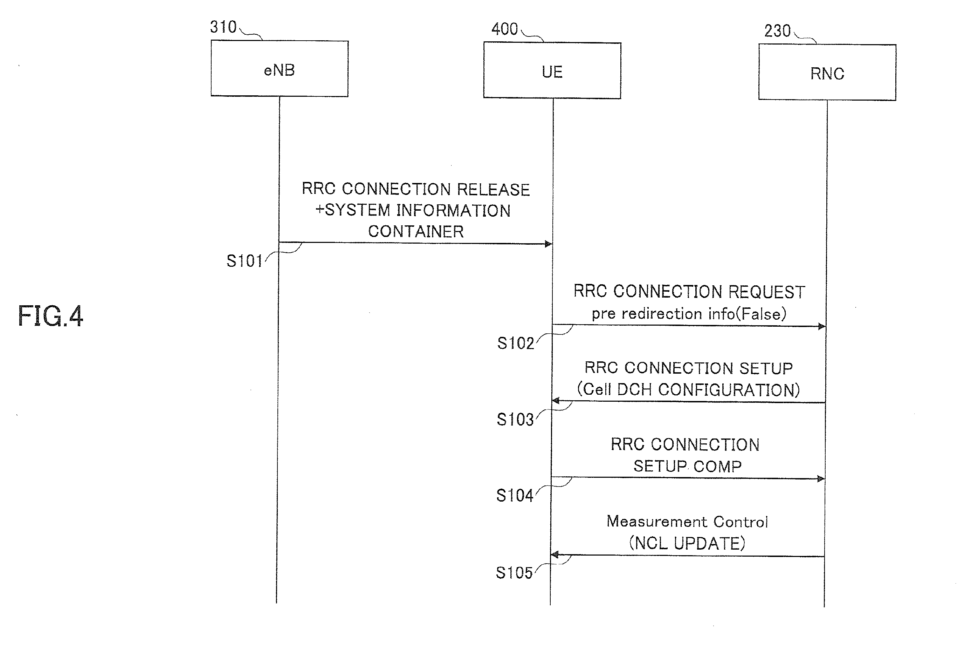

Next, redirection operations in a mobile communication system according to one embodiment of the present invention are described with reference to FIG. 4. FIG. 4 is a sequence diagram for illustrating cooperation among components in the mobile communication system according to one embodiment of the present invention.

In this embodiment, exemplary redirection operations are described for the mobile communication system 100 where the mobile station 400 presently communicating with the EUTRA system 300 redirects to the UTRA system 200 due to some triggers such as an occurrence of a predefined event.

As illustrated, at step S101, the base station (eNB) 310 in the EUTRA system 300 completes communication with the mobile station (UE) 400 and transmits a radio connection release message (RRC CONNECTION RELEASE) to cause the mobile station 400 to redirect to the UTRA system 200. In addition, the EUTRA system 300 sends the mobile station 400 a system information container including packaged UTRA broadcast information. The mobile station 400 stores the received system information container (SYSTEM INFORMATION CONTAINER). Note that the UTRA broadcast information may be transmitted together with the radio connection release message as illustrated or may be transmitted at any timing during communication with the EUTRA system 300.

At step S102, the mobile station 400 transmits a radio connection request message (RRC CONNECTION REQUEST) to the UTRA system 200 to establish radio connection to the UTRA system 200. Then, the mobile station 400 sets the pre-redirection information (pre-redirection info) being an information element included in the message to False and transmits the radio connection request message to the UTRA system 200. Upon receiving the radio connection request message from the mobile station 400, the radio controller (RNC) 230 in the UTRA system 200 determines the value of the pre-redirection information in the received radio connection request message. If the pre-redirection information is set to False, the radio controller 230 determines that the mobile station 400 has been redirected from the EUTRA system 300 and/or possesses the UTRA broadcast information.

At step S103, the radio controller 230 sets the connection mode for the mobile station 400 to the Cell_DCH, where a dedicated channel is assigned, and sends the mobile station 400 a response message (RRC CONNECTION SETUP) to the radio connection request from the mobile station 400.

At step S104, the mobile station 400 sends the UTRA system 200 a response message (RRC CONNECTION SETUP COMPLETE) to the received message, and the radio communication between the mobile station 400 and the UTRA system 200 has been established.

At step S105, the radio controller 230 transmits a measurement request signal (Measurement Control) to cause the mobile station 400 to measure a radio condition in a neighboring cell of the mobile station 400 in the UTRA system 200 and report measurement results to the radio controller 230. Based on the measurement request signal, the mobile station 400 updates the stored UTRA broadcast information obtained from the EUTRA system 300.

Note that although the radio controller 230 performs all of the Reject determination, the FACH transition determination and the NCL update determination in the above-stated embodiment for explanatory convenience, the present invention is not limited to this. In other words, the radio controller 230 may perform at least one of the Reject determination, the FACH transition determination and the NCL update determination. For example, if the radio controller 230 performs only the Reject determination, the radio controller 230 does not have to perform the FACH transition determination and the NCL update determination. In this case, when radio connection can be established, the radio controller 230 establishes the radio connection to the mobile station 400 without referring to the value of the pre-redirection information in accordance with a predefined radio connection establishment procedure.

Although the embodiments of the present invention have been described in detail, the present invention is not limited to the above-stated specific embodiments and can be changed and modified within the scope of the present invention defined in claims.

This international patent application is based on Japanese Priority Application No. 2010-105992 filed on April 30, 2010, the entire contents of which are hereby incorporated by reference.

### LIST OF REFERENCE SYMBOLS

- 100:: mobile communication system
- 200:: UTRA system
- 230:: radio controller
- 300:: EUTRA system
- 400:: mobile station

## Claims

1. A mobile station having abilities of communicating with a first network and a second network wherein the first network and the second network use mutually different radio access technologies, comprising:
a receiving unit configured to receive broadcast information of the second network from the first network;
a storage unit configured to store the received broadcast information of the second network; and
a pre-redirection information setting unit configured to, when the broadcast information of the second network is stored in the storage unit, set pre-redirection information included in a radio connection request message to a predefined value.

2. The mobile station as claimed in claim 1, further comprising:
a transmitting unit configured to transmit the radio connection request message to the second network,
wherein if the pre-redirection information is set to the predefined value, the transmitting unit sends the second network the radio connection request message having the pre-redirection information set to the predefined value.

3. The mobile station as claimed in claim 2, wherein
the radio connection request message is an RRC CONNECTION REQUEST,
the pre-redirection information is pre-redirection info, and
the predefined value is False.

4. The mobile station as claimed in claim 1, further comprising:
a measurement unit configured to measure a radio condition in a neighboring cell,
wherein when the receiving unit receives a measurement request message from the second network, the measurement unit updates neighboring cell information in the second network, the neighboring cell information possessed by the mobile station, and measures the radio condition in a neighboring cell in the second network.

5. A mobile station having abilities of communicating with a first network and a second network wherein the first network and the second network use mutually different radio access technologies, comprising:
a receiving unit configured to receive a redirection indication from the first network to the second network; and
a pre-redirection information setting unit configured to, in response to receipt of the redirection indication to the second network, set pre-redirection information included in a radio connection request message to a predefined value.

6. The mobile station as claimed in claim 5, further comprising:
a transmitting unit configured to transmit the radio connection request message to the second network,
wherein if the pre-redirection information is set to the predefined value, the transmitting unit sends the second network the radio connection request message having the pre-redirection information set to the predefined value.

7. The mobile station as claimed in claim 6, wherein
the radio connection request message is an RRC CONNECTION REQUEST,
the pre-redirection information is pre-redirection info, and
the predefined value is False.

8. A radio controller for controlling radio connection between a mobile station, the mobile station having abilities of communicating with a first network and a second network, and the second network wherein the first network and the second network use mutually different radio access technologies, comprising:
a receiving unit configured to receive a radio connection request message for wirelessly connecting to the second network from the mobile station;
a pre-redirection information determination unit configured to determine whether pre-redirection information in the received radio connection request message is set to a predefined value; and
a radio control determination unit configured to, if establishment of radio connection between the mobile station and the second network is impossible, transmit a radio connection rejection message including a redirection indication to the first network based on whether the pre-redirection information is set to the predefined value.

9. The radio controller as claimed in claim 8, wherein if the pre-redirection information is set to the predefined value, the radio control determination unit transmits the radio connection rejection message that does not include the redirection indication to the first network.

10. The radio controller as claimed in claim 9, wherein
the radio connection request message is an RRC CONNECTION REQUEST,
the radio connection rejection message is an RRC CONNECTION REJECT,
the pre-redirection information is pre-redirection info, and
the predefined value is False.

11. A radio controller for controlling radio connection between a mobile station, the mobile station having abilities of communicating with a first network and a second network, and the second network wherein the first network and the second network use mutually different radio access technologies, comprising:
a receiving unit configured to receive a radio connection request message for wirelessly connecting to the second network from the mobile station;
a pre-redirection information determination unit configured to determine whether pre-redirection information in the received radio connection request message is set to a predefined value; and
a radio control determination unit configured to, if the pre-redirection information is set to the predefined value, set to a connection mode where a dedicated channel is assigned and establish radio connection between the mobile station and the second network.

12. The radio controller as claimed in claim 11, wherein
the radio connection request message is an RRC CONNECTION REQUEST,
the connection mode where the dedicated channel is assigned is Cell_DCH,
the pre-redirection information is pre-redirection info, and
the predefined value is False.

13. A radio controller for controlling radio connection between a mobile station, the mobile station having abilities of communicating with a first network and a second network, and the second network wherein the first network and the second network use mutually different radio access technologies, comprising:
a receiving unit configured to receive a radio connection request message for wirelessly connecting to the second network from the mobile station;
a pre-redirection information determination unit configured to determine whether pre-redirection information in the received radio connection request message is set to a predefined value; and
a radio control determination unit configured to, if the pre-redirection information is set to the predefined value, transmit a measurement request message for causing the mobile station to update a neighboring cell of the mobile station in the second network and measure a radio condition in the neighboring cell.

14. The radio controller as claimed in claim 13, wherein
the radio connection request message is an RRC CONNECTION REQUEST,
the measurement request message is Measurement Control,
the pre-redirection information is pre-redirection info, and
the predefined value is False.
